# EUROPEAN PATENT SPECIFICATION

(11) **EP 3 307 076 B1**
(45) Date of publication and mention of the grant of the patent: **24.04.2019**
(21) Application number: 16731383.2
(22) Date of filing: 09.06.2016
(51) Int. Cl.: A23G 1/30, A23G 1/36, A23G 1/48

(54) **SEED PARTICLE PRODUCT**
SAATPARTIKELPRODUKT
PRODUIT DE PARTICULES DE GRAINES

(30) Priority: 10.06.2015 SE 1550783
(43) Date of publication of application: 18.04.2018
(73) Proprietor: AAK AB (Publ), 215 32 Malmö (SE)
(72) Inventor: ANDERSEN, Morten Daugaard, 8270 Højbjerg (DK)
(74) Representative: Patentgruppen A/S
(86) International application number: PCT/SE2016/050555
(87) International publication number: WO 2016/200327

(56) References cited:
- EP-A1- 2 314 170
- EP-A2- 0 964 618
- JP-A- 2000 125 768
- US-A1- 2005 049 426
- GOUK SHIOU WAH ET AL: "Rapid and direct quantitative analysis of positional fatty acids in triacylglycerols using 13C NMR", EUROPEAN JOURNAL OF LIPID SCIENCE AND TECHNOLOGY, vol. 114, no. 5, May 2012 (2012-05), pages 510-519, XP002760703, ISSN: 1438-7697, DOI: 10.1002/ejlt.201100074

## Description

### FIELD OF THE INVENTION

The invention relates to a confectionary product, particularly to a seed particle product. The invention further relates to a process for obtaining a seed particle product and a use of a seed particle product.

### BACKGROUND

Among many process steps involved in a usual step of chocolate manufacturing is the final process which is referred to as a tempering process. Uncontrolled crystallization of cocoa butter typically results in crystals of varying size. This causes the surface of the chocolate to appear mottled and matte, and causes the chocolate to crumble rather than snap when broken. The uniform sheen and crisp bite of properly processed chocolate are the result of consistently small cocoa butter crystals produced by the tempering process.

Such a tempering process may e.g. be obtained through use of well-known tempering equipment such as described in EP 1616487. US2005/049426A1 describes the production of stable micro-dispersed cocoa butter crystal suspensions for seed crystallization of suspensions containing chocolate, by subjecting cold-sprayed fatty powder to gradual thermal conditioning.

Another way of obtaining well-tempered chocolate may be to seed the chocolate. Seeding of the chocolate is however also a difficult art and among many challenges, it may be difficult to perform the seeding process itself efficient and in an industrial scale.

### SUMMARY

The invention relates to a seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions.

The invention further relates to a process for producing a seed particle product, the process comprising the steps of
providing a seed composition having a fat phase, wherein said fat phase comprises
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
particulating said seed composition to obtain the seed particle product,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions.

The invention further relates to a use of a seed particle product according to any of its embodiments, or a seed particle product produced by a process according to any its embodiments in production of confectionary products, such as chocolate or chocolate-like products.

The invention relates in a further aspect to a chocolate or a chocolate like product comprising the seed particle product according any of its embodiments.

### BRIEF DESCRIPTION OF THE DRAWINGS

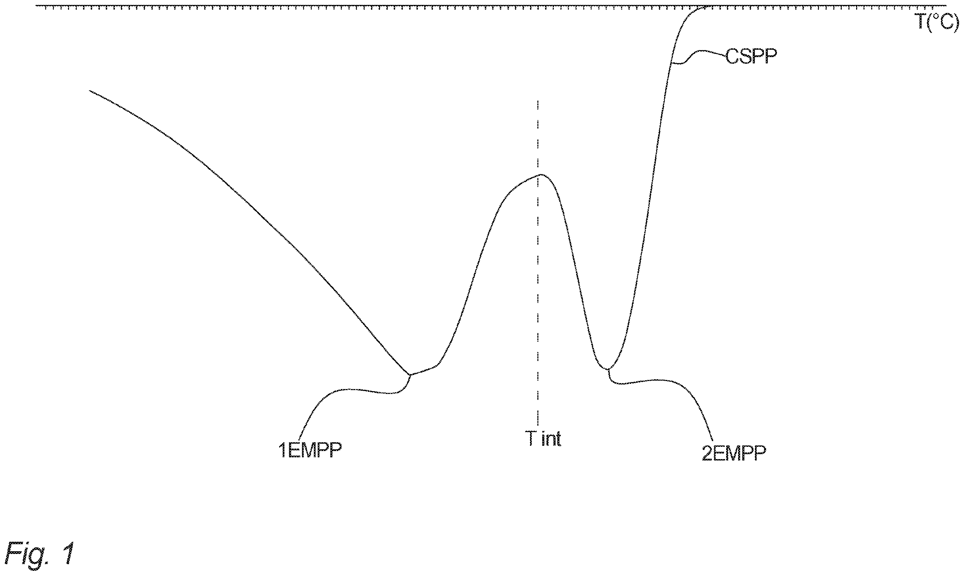

The invention will be described in the following with reference to the drawings, where
figure 1 shows an illustration of different relevant temperatures according to an embodiment including a first endotherm melt peak position 1EMPP, a second endotherm melt peak position 2EMPP, and an intermediate temperature T int positioned between the first endotherm melt peak position 1EMPP and the second endotherm melt peak position 2EMPP, where the x-axis relates to a temperature and the y-axis illustrates a non-quantified enthalpy per weight,

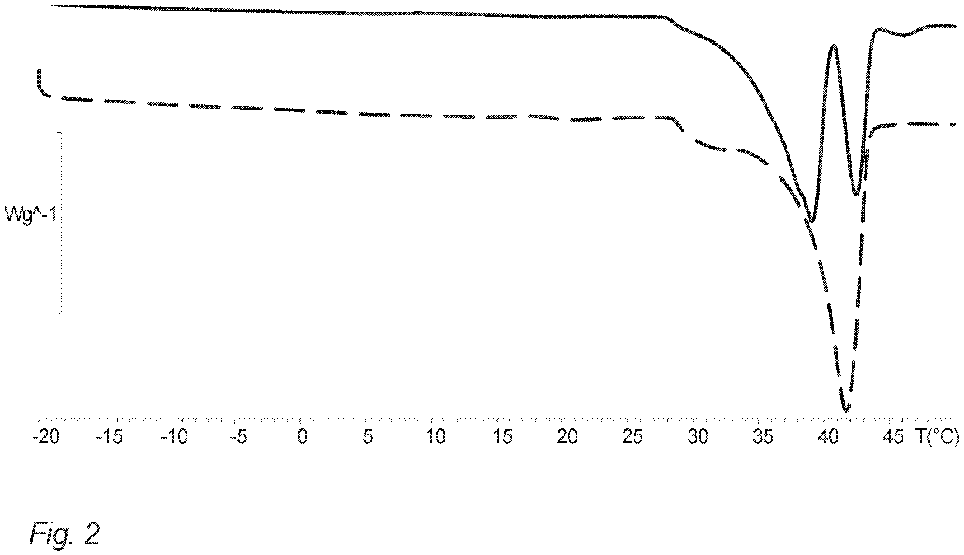

figure 2 shows a DSC melting thermogram according to example 2 where the DSC melting thermogram for the stored seed flakes is shown as the solid line and the DSC melting thermogram for the stored Shea stearin IV 36 is shown as the dashed line where the x-axis refers to a temperature and the y-axis is given in Watts per gram, and

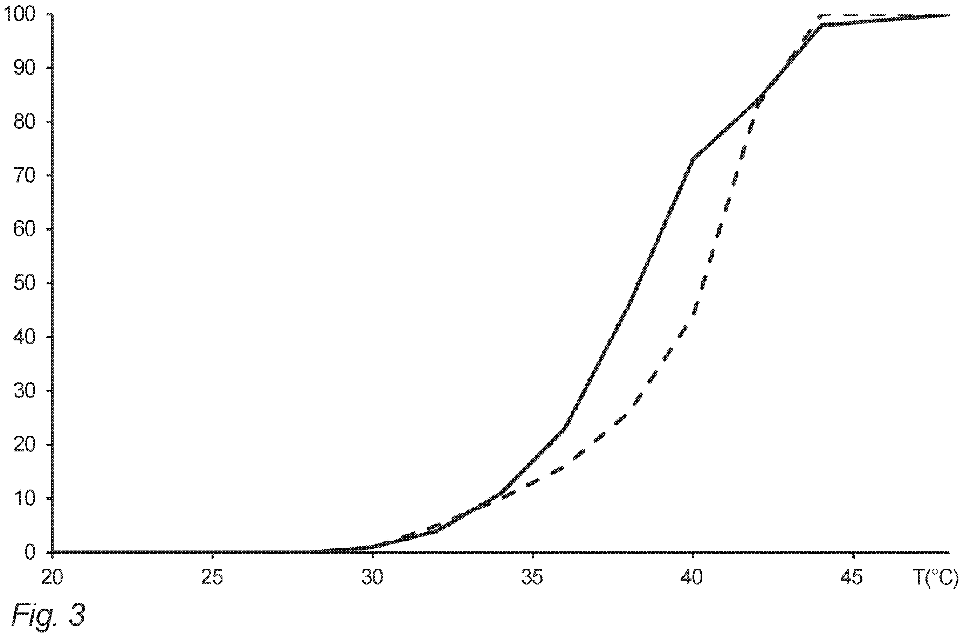

figure 3 shows integrated (accumulated) DSC melting thermogram intensities according to example 2 where the x-axis relates to a temperature and the y-axis refers to the percentage of the accumulated melting thermogram intensities.

### DETAILED DESCRIPTION

### Definitions

As used herein, the term "fatty acid" encompasses free fatty acids and fatty acid residues in triglycerides.

As used herein "edible" is something that is suitable for use as food or as part of a food product, such as a dairy or confectionary product. An edible fat is thus suitable for use as fat in food or food product and an edible composition is a composition suitable for use in food or a food product, such as a dairy or confectionary product.

As used herein, "%" or "percentage" all relates to weight percentage i.e. wt.% or wt.-% if nothing else is indicated.

As used herein, the singular forms "a", "an" and "the" include plural referents unless the context clearly dictates otherwise.

As used herein, "vegetable oil" and "vegetable fat" is used interchangeably, unless otherwise specified.

As used herein, "at least one" is intended to mean one or more, i.e. 1, 2, 3, 4, 5, 6, 7, 8, 9, 10, etc.

As used herein, the term "endotherm melt peak position" may refer to the position of a melt peak, which may be a main endotherm melt peak or it may be a smaller melt peak.

As used herein, the term "triglycerides" may be used interchangeably with the term 'triacylglycerides' and should be understood as an ester derived from glycerol and three fatty acids. "Triglycerides" may be abbreviated TG or TAG. A single triglyceride molecule, having a specific molecular formula, is of either vegetable or non-vegetable origin. Some triglycerides, like for example StOSt-triglycerides, may be obtained from both vegetable and/or non-vegetable sources. Thus a fat phase comprising StOSt-triglycerides, may comprise StOSt-triglycerides obtained solely from vegetable sources or StOSt-triglycerides obtained solely from non-vegetable sources or a combination thereof i.e. the fat phase may comprise some StOSt-triglyceride molecules obtained from vegetable sources and some StOSt-triglycerides molecules obtained from non-vegetable sources.

As used herein, the term "vegetable" shall be understood as originating from a plant retaining its original chemical structure/composition. Thus, a vegetable fat or vegetable triglycerides are still to be understood as vegetable fat or vegetable triglycerides after fractionation etc. as long as the chemical structure of the fat components or the triglycerides are not altered. When vegetable triglycerides are for example transesterified they are no longer to be understood as a vegetable triglyceride in the present context.

Similarly, the term "non-vegetable" in the context of "non-vegetable triglyceride" or "non-vegetable fat" when used herein is intended to mean obtained from other sources than native vegetable oils or fractions thereof, or obtained after transesterification. Examples of non-vegetable triglycerides may for example be, but are not limited to, triglycerides obtained from unicellular organisms, animal fat, and/or transesterification.

As used herein, "transesterification" should be understood as replacing one or more of the fatty acid moieties of a triglyceride with another fatty acid moiety or exchanging one or more fatty acid moieties from one triglyceride molecule to another. A fatty acid moiety may be understood as a free fatty acid, a fatty acid ester, a fatty acid anhydride, an activated fatty acid and/or the fatty acyl part of a fatty acid. The term 'transesterification' as used herein may be used interchangeably with 'interesterification'. The transesterification process may be an enzymatic transesterification or chemical transesterification. Both chemical transesterification and enzymatic transesterification is described well in the art. Both chemical and enzymatic transesterification may be done by standard procedures.

As used herein "partly melted" is intended to mean not totally melted and not totally solid or crystalline. Within a certain temperature range the seed product has to be melted enough to be pumpable, and may not be melted to an extent that no seed crystals capable of seeding chocolate remains. In certain embodiments partly melted may be understood more narrow, for example that a certain percentage is melted and a certain percentage is non-melted, i.e. solid or crystalline. This may for example be represented by the solid fat content (SFC). Several methods for measuring SFC are known in the art.

As used herein "seed" is intended to mean a composition comprising at least some fat crystals capable of seeding a chocolate.

As used herein, the term "slurry" is a partly melted composition, where at least some seed crystals capable of seeding chocolate are present. Thus a "slurry" may also for example be understood as a partly melted suspension, partly molten suspension or a paste.

In this context, the term "bloom resistance" refers to a property of the chocolate to resist bloom formation. Increased or improved bloom resistance in a chocolate in the present context thus implies that the chocolate has a higher resistance towards surface blooming.

As used herein, the term "fraction" shall in this regard be understood to be a product remaining after a physical separation of the constituents of a natural source of a fat. This product may subsequently be subjected to a transesterification.

As used herein an integrated intensity of the melting thermogram between a first temperature T1 and a second temperature T2 is the percentage of the integrated intensity of the melting thermogram between T1 and T2 relative to the total integrated intensity of the melting thermogram between 20 degrees Celsius and 65 degrees Celsius.

As used herein a "chocolate" is to be understood as chocolate and/or chocolate-like products. Some chocolate comprises cocoa butter, typically in substantial amounts, where some chocolate-like product may be produced with a low amount or even without cocoa butter, e.g. by replacing the cocoa butter with cocoa butter equivalent, cocoa butter substitute, etc. Also, many chocolate products comprises cocoa powder or cocoa mass, although some chocolate products, such as typical white chocolates, may be produced without cocoa powder, but e.g. drawing its chocolate taste from cocoa butter. Depending on the country and/or region there may be various restrictions on which products may be marketed as chocolate. By a chocolate product is meant a product, which at least is experienced by the consumer as chocolate or as a confectionery product having sensorial attributes common with chocolate, such as e.g. melting profile, taste etc.
As used herein a "heat stable chocolate" is a chocolate which has a relatively high resistance to heat, and heat-related effects, particularly bloom. The heat stable chocolate will in certain embodiments retain this heat stability, particularly bloom stability, at temperatures above which such stability is normally lost for conventional chocolate products.

As used herein the term "seed particle product" is intended to mean a seed product for producing a chocolate or chocolate-like product, e.g. in combination with the use of traditional tempering or as an alternative thereto. The seed particle product may be provided as particles, such as flakes, pellets, granules, chips, or powder.

As used herein the temperature T_intermediate is a temperature above the first endotherm melt peak position and below the second endotherm melt peak position. According to the invention, the temperature T_intermediate is at least 39.5 degrees Celsius.

### Abbreviations

Sat = saturated fatty acid/acyl-group
U = unsaturated fatty acid/acyl-group
St = stearic acid/stearate
A = arachidic acid/arachidate
B = behenic acid/behenate
Lig = lignoceric acid/lignocerate
O = oleic acid/oleate
DSC = Differential Scanning Calorimetry

The invention further relates to a seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions.

It should be understood that the triglycerides having C16 - C24 saturated fatty acids in the *sn-1* and *sn-3* positions of the triglyceride and oleic acid in the *sn-2* position of the triglyceride, form part of the total amount of triglycerides comprised in the fat phase of the heat stable chocolate.

Since 60.0-99.9% by weight of the fat phase is triglycerides, 0.1 - 40% by weight of the fat phase may be other fats than triglycerides, such as free fatty acids, monoglycerides, diglycerides or any combination thereof.

Further, 40.0-99.0 % by weight of said triglycerides are triglycerides having C16 - C24 saturated fatty acids in the *sn-1* and *sn-3* positions of the triglyceride and oleic acid in the *sn-2* position of the triglyceride. Examples of such triglycerides having C16 - C24 saturated fatty acids in the *sn-1* and *sn-3* positions of the triglyceride and oleic acid in the *sn-2* position of the triglyceride are StOSt, POSt, POP, StOA, StOB, StOLig, AOA, AOB, AOLig, BOB, BOLig, and LigOLig. Thus, if the fat phase for example comprises 60% triglycerides, then 40%-99% of said 60% triglycerides are triglycerides having C16 - C24 saturated fatty acids in the *sn-1* and *sn-3* positions of the triglyceride and oleic acid in the *sn-2* position of the triglyceride, which in this case would mean that the fat phase then comprises 24%-59.4% of triglycerides having C16 - C24 saturated fatty acids in the *sn-1* and *sn-3* positions of the triglyceride and oleic acid in the *sn-2* position of the triglyceride.

The seed particle product according to the invention have the advantage that even a slight melting of seed particle product may be acceptable insofar form stability as such is not the major issue for the subsequent use of seed particle product, e.g. as a seed for seeding a chocolate.
One advantage of the invention may be that by providing a seed particle product having lower melting temperature triglycerides, i.e. exhibiting a first endotherm melt peak position at below the temperature T_intermediate, e.g. under 39.5 degrees Celsius, the seed particle product is provided as particles which are slurryfyable, i.e. may be processed into a slurry by heating, and thus pumpable and mixable with a chocolate composition. A further important advantage is that although the seed particle product may be processed into a slurry, the liquid triglycerides establishing the slurry may be transformed into high melting crystals in a final confectionary product, thus avoiding lowering the melting point of a final confectionary product. Finally, while obtaining the above advantages, the seed particle product may facilitate, due to having an endotherm melt peak position above the temperature T_intermediate, i.e. having seed crystals being solid at the temperature T_intermediate, e.g. 39.5 degrees Celsius, that the final confectionary product is obtained as a heat stable chocolate, which may retain its advantageous bloom resistance at relatively high temperatures, even above where conventional chocolate products may lose their tempering and thus become vulnerable to e.g. bloom formation. Such as for example at temperatures above the melting point of the chocolate or when the chocolate is completely melted. This may for example be around 36 degrees Celsius, around 37 degrees Celsius, around 38 degrees Celsius or around 39 degrees Celsius.

It should be noted that the provision of providing a seed particle product having a first endotherm melt peak position and a second endotherm melt peak position makes it possible to provide a seed product which may be handled easily with respect to e.g. logistics prior to a seeding due to the fact that the seed is a particle. Moreover, it is noted that the seed particle product contains all the necessary components to facilitate an effective seeding. Segregation may be avoided. Another important feature is to obtain first and second endotherm melt peak positions in the particle, thereby obtaining a seed particle product which may utilize the triglycerides in the particle having a melting point below the second endotherm melt peak position to ensure that the seed particle product may be partly melted preferably prior to the mixing with a confectionery product to be seeded. Is should be noted that this mixing of high melting and low melting triglycerides in the seed particle thus facilitates a seeding of a chocolate confectionery which result in a more heat stable product than what is known in the art today.

Thus, one important advantage of the invention may be that the seed particle product may be used to obtain superior heat stable chocolate in a relatively simple and efficient manner.

Heat stable in the present context may advantageously refer to the final products ability to regenerate the texture after being partly or wholly melted at a relatively high temperature. Such as for example at temperatures above the melting point of the chocolate or when the chocolate is completely melted. This may for example be around 36 degrees Celsius, around 37 degrees Celsius, around 38 degrees Celsius or around 39 degrees Celsius. The regeneration will thus occur after cooling to a temperature below the relatively high temperature, such as for example at ambient temperature, which may for example be between 20 to 25 degrees Celsius.

In the present context it should be noted that the provided seed particle product when used as a seed may allow a certain degree of deformation of a final resulting seeded chocolate product without compromising the texture or the mouth feel significantly if the seeded chocolate product is subject to elevated ambient temperatures melting the chocolate partly and a subsequent cooling causing the chocolate to solidify again.

Moreover, it should be noted that the provided seed particle product is very advantageous conceptually insofar the solid seed is easy to apply for its final seeding purpose at chocolate manufacturing site which is optionally remote to the manufacturing site of the seed particle product. This is in particular advantageous and made possible due to the presence of very high second endotherm melt peak position above T_intermediate. The combination of this second endotherm melt peak position above T_intermediate and the fact that the seed particle product is rich in triglycerides having C16 - C24 saturated fatty acids in the sn-1 and sn-3 positions makes it possible to produce, handle, distribute and apply the seed. One important feature is that the seed particle product as such has little tendency towards clogging and melting together during transport, given the fact that the applied crystals, even those melting below T_intermediate are relatively high melting. Another important feature is that the seed particle product in practice becomes low stick and intermediate sticking is kept low and it is thereby made possible to provide the seed particle product in a particle form rather than solid blocks. The provided seed particle product may also be handled with existing or slightly modified means for logistics due to the fact that particles of the seed particle product are flowable and may be handled by pumps or conveyers involving little manual work.

According to the invention, said fat phase comprises triglycerides having C16 - C24 saturated fatty acids in the *sn-1* and *sn-3* positions of the triglyceride and oleic acid in the *sn-2* position of the triglyceride in an amount of between 40.0 to 99.0 % by weight of said fat phase. The triglycerides having C16 - C24 saturated fatty acids in the *sn-1* and *sn-3* positions of the triglyceride and oleic acid in the *sn-2* position of the triglyceride are a subset of the total amount of triglycerides in the fat phase, i.e. the triglycerides constituting 60.0 - 99.9 % by weight of the fat phase.
This means that, for example, in an embodiment where the triglyceride-content in the fat phase is 90% by weight of the fat phase, and the content of triglycerides having C16 - C24 saturated fatty acids in the *sn-1* and *sn-3* positions of the triglyceride and oleic acid in the *sn-2* position of the triglyceride in the fat phase is 70% by weight of the fat phase, there are 20% by weight of the fat phase of triglycerides other than triglycerides having C16 - C24 saturated fatty acids in the *sn-1* and *sn-3* positions of the triglyceride and oleic acid in the *sn-2* position of the triglyceride in the fat phase.

According to an embodiment of the invention, the seed composition is substantially free of non-fat components, such as sugar or cocoa powder. Thus, the seed composition may have a non-fat content of less than 5% by weight, such as less than 1% by weight, such as less than 0.1% by weight.

According to an advantageous embodiment, said melting thermogram is obtained by Differential Scanning Calorimetry (DSC) by a METTLER TOLEDO DSC 823e with a HUBER TC45 immersion cooling system, where 10 +/- 1 mg samples of the chocolate confectionery product is hermetically sealed in a 40 microliter aluminum pan with an empty pan as reference to produce a melting thermogram

According to an embodiment of the invention, said melting thermogram defining the melt peak positions are made shortly after production of said seed particle product, such as e.g. 1 hour after production, such as 2, 4, 8, or 24 hours after production.

According to an embodiment of the invention, said melting thermogram defining the melt peak positions are made about 1 hour after production of said seed particle product.

The seed particle product may be produced to fulfil certain requirements with regard to density. Thus, according to an advantageous embodiment of the invention, said seed particle product has a density of less than 0.9 grams per cubic centimeter, such as less than 0.8 grams per cubic centimeter, such as less than 0.7 grams per cubic centimeter, such as less than 0.6 grams per cubic centimeter, such as less than 0.5 grams per cubic centimeter, such as less than 0.4 grams per cubic centimeter, such as less than 0.3 grams per cubic centimeter, such as less than 0.2 grams per cubic centimeter.

One important advantage of providing the seed particle product according to the above embodiment may be that a relatively light weight product may be easier to process into a seed slurry, e.g. due to a relatively high surface to volume ratio.
According to an embodiment of the invention, said seed particle product has a density of less than 0.8 grams per cubic centimeter

According to an advantageous embodiment of the invention, said seed particle product has a density of 0.1 - 0.8 grams per cubic centimeter, such as 0.2 - 0.7 grams per cubic centimeter, such as 0.3 - 0.6 grams per cubic centimeter.

One important advantage of providing the seed particle product according to the above embodiment may be that a relatively light weight product may be easier to process into a seed slurry, e.g. due to a relatively high surface to volume ratio, while the density is kept sufficiently high so that transportation costs per weight of seed particle product is kept sufficiently low.

The temperature T_intermediate may depend on the specific content of triglycerides in the fat composition and the crystal content therein. Therefore, according to a further advantageous embodiment of the invention, said temperature T_intermediate is at least 40 degrees Celsius, such as at least 40.5 degrees Celsius, such as at least 41.0 degrees Celsius, such as at least 41.5 degrees Celsius, such as at least 42.0 degrees Celsius.

According to a further embodiment of the invention, said temperature T_intermediate is at least 47.0 degrees Celsius, such as at least 51.0 degrees Celsius. This may especially be the case when the seed particle product is based on AOA-triglycerides or BOB-triglycerides.

According to further advantageous embodiment of the invention, the temperature T_intermediate is between 39.5 and 42.0 degrees Celsius, such as 40.0 degrees Celsius, or 40.5 degrees Celsius, or 41.0 degrees Celsius, or 41.5 degrees Celsius. This is particularly applicable when the fat phase has a relatively high content of StOSt-triglycerides.

The temperature T_intermediate is influenced by the specific composition and crystal content of the seed particle product. Therefore, both the maximum limit and the minimum limit of the temperature T intermediate may vary due to the triglyceride content. Thus, according to a further embodiment of the invention, the temperature T_intermediate is at least 40.0 degrees Celsius, such as at least 40.5 degrees Celsius, such as at least 41.0 degrees Celsius when said seed particle product comprises StOSt-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein St stands for stearic acid and O stands for oleic acid..

Similarly, the maximum limit of the temperature T_intermediate may vary due to the triglyceride content. Thus, according to an embodiment of the invention, the temperature T_intermediate is less than 42.0 degrees Celsius, such as less than 41.0 degrees Celsius, such as 40.0 degrees Celsius when said seed particle product comprises StOSt-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein St stands for stearic acid and O stands for oleic acid..

According to an even further advantageous embodiment of the invention, the temperature T_intermediate is between 44.0 and 48.0 degrees Celsius, such as between 45.0 and 48.0 degrees Celsius, such as between 46.0 and 48.0 degrees Celsius, such as between 47.0 and 48.0 degrees Celsius, such as 46.5 degrees Celsius, such as 46.5 degrees Celsius, such as 47.0 degrees Celsius, or 47.5 degrees Celsius, or 48.0 degrees Celsius. This is particularly applicable when the fat phase has a relatively high content of AOA-triglycerides.

The temperature T_intermediate is influenced by the specific composition and crystal content of the seed particle product. Therefore, both the maximum limit and the minimum limit of the temperature T intermediate may vary due to the triglyceride content. Thus, according to an embodiment of the invention, the temperature T_intermediate is at least 44 degrees Celsius, such as at least 45 degrees Celsius, such as at least 46 degrees Celsius, such as at least 47 degrees Celsius, such as at least 47.5 degrees Celsius when said seed particle product comprises AOA-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein A stands for arachidic acid and O stands for oleic acid.

Similarly, the maximum limit of the temperature T_intermediate may vary due to the triglyceride content. Thus, according to an embodiment of the invention, the temperature T_intermediate is less than 48 degrees Celsius, such as less than 47.5 degrees Celsius when said seed particle product comprises AOA-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein A stands for arachidic acid and O stands for oleic acid.

According to a still further advantageous embodiment of the invention, the temperature T_intermediate is between 49.0 and 53.0 degrees Celsius, such as between 50.0 and 53.0 degrees Celsius, such as between 51.0 and 53.0 degrees Celsius, such as 51.5 degrees Celsius, or 52.0 degrees Celsius, or 52.5 degrees Celsius. This is particularly applicable when the fat phase has a relatively high content of BOB-triglycerides.

The temperature T_intermediate is influenced by the specific composition and crystal content of the seed particle product. Therefore, both the maximum limit and the minimum limit of the temperature T intermediate may vary due to the triglyceride content. Thus, according to an embodiment of the invention, the temperature T_intermediate is at least 49.0 degrees Celsius, such as at least 50.0 degrees Celsius, such as at least 51.0 degrees Celsius., such as at least 51.5 degrees Celsius, such as at least 52.0 degrees Celsius, such as at least 52.5 degrees Celsius when said seed particle product comprises BOB-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein B stands for behenic acid and O stands for oleic acid..

Similarly, the maximum limit of the temperature T_intermediate may vary due to the triglyceride content. Thus, according to an embodiment of the invention, the temperature T_intermediate is less than 53.0 degrees Celsius, such as less than 52.5 degrees Celsius, such as at least 52.0 degrees Celsius, such as at least 51.5 degrees Celsius when said seed particle product comprises BOB-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein B stands for behenic acid and O stands for oleic acid..

The distance between the first endotherm melt peak position and the second endotherm melt peak position may vary, e.g. due to the specific triglyceride content and crystal content in the fat phase. Thus, according to a further advantageous embodiment of the invention, said second endotherm melt peak position is at least 0.5 degree Celsius higher than said first endotherm melt peak position, such as at least 1.0 degree Celsius higher, such as at least 1.5 degrees Celsius higher, such as at least 2.0 degrees Celsius higher, such as at least 2.5 degrees Celsius higher, such as at least 3.0 degrees Celsius higher, such as at least 4.0 degrees Celsius higher. One advantage of this embodiment may be that it may be substantially easier to perform a melting of only the lower melting triglycerides corresponding to the first endotherm melt peak position.

According to an even further advantageous embodiment of the invention, said second endotherm melt peak position is between 0.5 and 6.0 degrees Celsius higher than said first endotherm melt peak position, such as between 1.0 and 5.0 degrees Celsius higher, such as between 3.0 and 5.0 degrees Celsius higher, or such as between 1.0 and 3.0 degrees Celsius higher, such as between 1.5 and 3.0 degrees Celsius higher, such as between 2.0 and 3.0 degrees Celsius higher, such as between 2.5 and 3.0 degrees Celsius higher.

One advantage of the above embodiment may be that it may be substantially easier to perform a melting of only the lower melting triglycerides corresponding to the first endotherm melt peak position.

The DSC thermogram may have a large first endotherm melt peak and a smaller second endotherm melt peak position. According to an advantageous embodiment of the invention the first endotherm melt peak position accounts for 15.0-99.9 % of the endotherm enthalpy during the measurement.

According to a further advantageous embodiment of the invention the first endotherm melt peak position accounts for 20.0-99.9 % of the endotherm enthalpy during the measurement.

According to an even further advantageous embodiment of the invention the first endotherm melt peak position accounts for 30.0-99.9 % of the endotherm enthalpy during the measurement.

According to a still further advantageous embodiment of the invention the first endotherm melt peak position accounts for 40.0-99.9 % of the endotherm enthalpy during the measurement.

According to an even still further advantageous embodiment of the invention, the first endotherm melt peak position accounts for 50.0-99.9 % of the endotherm enthalpy during the measurement.

According to a further advantageous embodiment of the invention the first endotherm melt peak position accounts for 60.0-99.9 % of the endotherm enthalpy during the measurement.

According to an even further advantageous embodiment of the invention the first endotherm melt peak position accounts for 70.0-99.9 % of the endotherm enthalpy during the measurement.

One advantage of the above embodiment may be that the seed particle product may be processed into a slurry having a lower viscosity and thus improved pumpability and mixability.

According to a further embodiment of the invention the first endotherm melt peak position accounts for at least 15 % of the endotherm enthalpy during the measurement.

According to an even further advantageous embodiment of the invention, the second endotherm melt peak position accounts for 0.1-85.0 % of the endotherm enthalpy during the measurement.

According to a still further advantageous embodiment of the invention the second endotherm melt peak position accounts for 1-85 % of the endotherm enthalpy during the measurement.

According to an even still further advantageous embodiment of the invention the second endotherm melt peak position accounts for 5-85 % of the endotherm enthalpy during the measurement.

According to a further advantageous embodiment of the invention the second endotherm melt peak position accounts for 10-85 % of the endotherm enthalpy during the measurement.

According to an even further advantageous embodiment of the invention the second endotherm melt peak position accounts for 15-85 % of the endotherm enthalpy during the measurement.

According to a still further advantageous embodiment of the invention the second endotherm melt peak position accounts for 20-85 % of the endotherm enthalpy during the measurement.

One significant advantage of the above embodiment may be that by having a second endotherm melt peak position that accounts for a relatively high amount of the endotherm enthalpy during the measurement, a final chocolate product may be obtained having a high heat resistance and resistance to heat induced defects, particularly bloom formation. This resistance may even be retained at relatively high temperatures, where typical conventional chocolate products loose their tempering characteristics and thus become vulnerable to e.g. bloom formation.

According to a further embodiment of the invention, the second endotherm melt peak position accounts for at least 15 % of the endotherm enthalpy during the measurement.

According to a still further embodiment of the invention, 0.1-80 % of said triglycerides, such as 1-80 % of said triglycerides, such as 5-80 % of said triglycerides, such as 10-80 % of said triglycerides, such as 15-80 % of said triglycerides, such as 20-80 % of said triglycerides, exhibits said second endotherm melt peak position.

According to an even further advantageous embodiment of the invention, said first endotherm melt peak position exhibit a first peak intensity, wherein said second endotherm melt peak position exhibit a second peak intensity, and wherein said first peak intensity is at least 30% of said second peak intensity.

According to an embodiment of the invention, said first peak intensity is between 30% and 500 % of said second peak intensity, such as between 30% and 300%, such as between 50% and 200%, such as between 75% and 130%.

According to a still further advantageous embodiment of the invention, wherein an integrated intensity of said melting thermogram from 20 degrees Celsius to T_intermediate is at least 15 %, such as at least 25 %, such as at least 35%, such as at least 50%, such as at least 70%.

According to an even further advantageous embodiment of the invention, an integrated intensity of said melting thermogram from T_intermediate to 65 degrees Celsius is at least 5 %, such as at least 10%, such as at least 15%, such as at least 20 %.

The specific content and triglyceride composition of the seed particle product may vary. Thus, according to a further advantageous embodiment of the invention, said seed particle product comprises triglycerides in an amount of 70.0 - 99.9% by weight of said seed particle product.

According to a further advantageous embodiment of the invention, said seed particle product comprises triglycerides in an amount of 80.0 - 99.9% by weight of said seed particle product

According to an even further advantageous embodiment of the invention, said seed particle product comprises triglycerides in an amount of 90.0 - 99.9% by weight of said seed particle product

According to even still further advantageous embodiment of the invention, said seed particle product comprises triglycerides in an amount of 95.0 - 99.9% by weight of said seed particle product

One advantage of the above embodiment may be that a final chocolate product with relatively high triglyceride content may be obtained using the seed particle product.

The fat phase may have an increased amount of higher melting triglycerides compared to e.g. cocoa butter. Thus, according to an advantageous embodiment of the invention, said fat phase has a weight-ratio between
- triglycerides having C18 - C24 saturated fatty acids in the *sn-1* and *sn-3* positions and oleic acid in the *sn-2* position of the triglyceride, and
- triglycerides having C16 - C24 saturated fatty acids in the *sn-1* and *sn-3* positions and oleic acid in the *sn-2* position of the triglyceride,
which is between 0.40 - 0.99, such as 0.45 - 0.99, such as 0.50 - 0.99, such as 0.55 - 0.99, such as 0.60 - 0.99, such as 0.65 - 0.99, such as 0.70 - 0.99.

In the present context it should be understood that the weight-ratio of the above embodiment is the weight-ratio between Sat(C18-C24)OSat(C18-C24) triglycerides and Sat(C16-C24)OSat(C16-C24) triglycerides, wherein said Sat(C18-C24)OSat(C18-C24) triglycerides are triglycerides having C18 - C24 saturated fatty acids in the sn-1 and sn-3 positions and oleic acid in the sn-2 position, and wherein said Sat(C16-C24)OSat(C16-C24) triglycerides are triglycerides having C16 - C24 saturated fatty acids in the sn-1 and sn-3 positions and oleic acid in the sn-2 position.

One significant advantage of having a relatively high content of triglycerides having C18 - C24 saturated fatty acids in the *sn-1* and *sn-3* positions, such as e.g. StOSt, may be that a more heat stable seed product, and hence a more heat stable final confectionary product, such as a chocolate or chocolate-like product, when comparing to seed products based on e.g. cocoa butter. Cocoa butter typically has a corresponding weight-ratio below 0.38. One significant factor in obtaining such heat stable products may be that a higher endotherm melt peak position may be obtained, due to the relatively high content of triglycerides having C18 - C24 saturated fatty acids in the *sn-1* and *sn-3* positions and oleic acid in the *sn-2* position of the triglyceride, such as e.g. StOSt-triglycerides, AOA-triglycerides or BOB-triglycerides. This facilitates not only that the seed product itself may be more heat stable but also that the final product has an increased heat stability, which may be due to retained seed crystals having a high content of triglycerides having C18 - C24 saturated fatty acids in the *sn-1* and *sn-*3 positions and oleic acid in the *sn-2* position of the triglyceride, such as e.g. StOSt-triglycerides, AOA-triglycerides or BOB-triglycerides.

Triglycerides having C18 - C24 saturated fatty acids in the sn-1 and sn-3 positions and oleic acid in the sn-2 position are examples of SatOSat triglycerides. It should be understood that the saturated fatty acids in the sn-1 and the sn-3 positions may not necessarily be the same, although they may be in some cases. Examples of such triglycerides include StOSt, StOA, StOB, StOLig, AOA, AOB, AOLig, BOB, BOLig, and LigOLig.

Triglycerides having C18 - C24 saturated fatty acids in the sn-1 and sn-3 positions and oleic acid in the sn-2 position may also comprise a combination of two or more of the triglycerides StOSt, StOA, StOB, StOLig, AOA, AOB, AOLig, BOB, BOLig, and LigOLig, where these triglycerides are comprised in an amount of 30.0 - 99.0% by weight of the triglycerides having C18 - C24 saturated fatty acids in the sn-1 and sn-3 positions and oleic acid in the sn-2 position, such as 40.0 - 99.0% by weight, such as 50.0 - 99.0% by weight, such as 60.0 - 99.0% by weight, such as 70.0 - 99.0% by weight.

According to a further embodiment of the invention, said fat phase has a weight-ratio between
- triglycerides having C18 - C24 saturated fatty acids in the *sn-1* and *sn-3* positions and oleic acid in the *sn-2* position of the triglyceride, and
- triglycerides having C16 - C24 saturated fatty acids in the *sn-1* and *sn-3* positions and oleic acid in the *sn-2* position of the triglyceride,
which is between 0.40 - 0.95, such as 0.45 - 0. 95, such as 0.50 - 0. 95, such as 0.55 - 0.95, such as 0.60 - 0.95, such as 0.65 - 0.95, such as 0.70 - 0.95.

According to an even further advantageous embodiment of the invention, said seed particle product comprises 30.0 - 99.0% by weight of triglycerides having C18 - C24 saturated fatty acids in the sn-1 and sn-3 positions of the triglyceride and oleic acid in the sn-2 position of the triglyceride.

According to a still further advantageous embodiment of the invention, said seed particle product comprises 40.0 - 99.0% by weight of triglycerides having C18 - C24 saturated fatty acids in the sn-1 and sn-3 positions of the triglyceride and oleic acid in the sn-2 position of the triglyceride.

According to an even still further advantageous embodiment of the invention, said seed particle product comprises 50.0 - 99.0% by weight of triglycerides having C18 - C24 saturated fatty acids in the sn-1 and sn-3 positions of the triglyceride and oleic acid in the sn-2 position of the triglyceride.

Thus, it should be understood in accordance with the above embodiment that between 30.0 % by weight and 99.9% by weight of the triglycerides in the seed particle product has C16 - C24 saturated fatty acids in the sn-1 and sn-3 positions of the triglyceride and oleic acid in the sn-2 position of the triglyceride.

According to a further embodiment of the invention, said seed particle product comprises 50.0 - 99.9% by weight of triglycerides having C16 - C24 saturated fatty acids in the sn-1 and sn-3 positions and oleic acid in the sn-2 position of the triglyceride, such as 60.0-99.9% by weight, such as 70.0-99.9% by weight, such as 80-99.9% by weight.

According to a further embodiment of the invention, said seed particle product comprises 40.0 - 95.0 % by weight of triglycerides having C16 - C24 saturated fatty acids in the *sn-1* and *sn-3* positions of the triglyceride and oleic acid in the *sn-2* position of the triglyceride, such as 50.0 - 95.0 by weight, such as 60.0 - 95.0%, such as 70.0-95.0%, or such as 50.0 - 90.0%.

Thus, it should be understood in accordance with the above embodiment that between 40.0 % by weight and 95.0% by weight of the triglycerides in the seed particle product has C16 - C24 saturated fatty acids in the sn-1 and sn-3 positions and oleic acid in the sn-2 position of the triglyceride.

The fat phase may have a relatively high amount of StOSt-triglycerides. Therefore, according to an advantageous embodiment of the invention, said seed particle product comprises StOSt-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein St stands for stearic acid and O stands for oleic acid. A high amount of StOSt-triglycerides in the fat phase may be particular advantageous, since the highest melting StOSt-triglyceride crystals have a melting point above the melting point of chocolate, and hence even when the chocolate is exposed to high temperatures above the melting point of the chocolate, the seed particle product comprising high melting crystal polymorphic forms of StOSt-triglycerides will still be able to induce recrystallization of the chocolate into the desired crystal polymorphic form. This will increase the bloom stability of the seeded chocolate.

One further advantage of the above embodiment may be that StOSt-triglycerides are found in natural cocoa butter and that many StOSt-rich fats have a relatively high compatibility and miscibility with cocoa butter, and also that StOSt may be obtained via various sources, such as natural sources, which are relatively abundant.

According to a further embodiment of the invention, said seed particle product comprises StOSt-triglycerides in an amount of 30.0 - 99.0% by weight of said triglycerides, such as 40.0-90.0% by weight, such as 50.0-90.0% by weight, such as 50.0-80.0% by weight, wherein St stands for stearic acid and O stands for oleic acid.

The fat phase may have a relatively high amount of AOA-triglycerides. Therefore, according to an advantageous embodiment of the invention, said seed particle product comprises AOA-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein A stands for arachidic acid and O stands for oleic acid.

According to a further embodiment of the invention, said seed particle product comprises AOA-triglycerides in an amount of 30.0 - 99.0% by weight of said triglycerides, such as 40.0-90.0% by weight, such as 50.0-90.0% by weight, such as 50.0-80.0% by weight, wherein A stands for arachidic acid and O stands for oleic acid.

The fat phase may have a relatively high amount of BOB-triglycerides. Therefore, according to an advantageous embodiment of the invention, said seed particle product comprises BOB-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein B stands for behenic acid and O stands for oleic acid.

According to a further embodiment of the invention, said seed particle product comprises BOB-triglycerides in an amount of 30.0 - 99.0% by weight of said triglycerides, such as 40.0-90.0% by weight by weight, such as 50.0-90.0% by weight, such as 50.0-80.0% by weight, wherein B stands for behenic acid and O stands for oleic acid.

According to an advantageous embodiment of the invention, said seed particle product comprises LigOLig-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein Lig stands for Lignoceric acid and O stands for oleic acid.

According to a further embodiment of the invention, said seed particle product comprises LigOLig-triglycerides in an amount of 30.0 - 99.0% by weight of said triglycerides, such as 40.0-90.0% by weight by weight, such as 50.0-90.0% by weight, such as 50.0-80.0% by weight, wherein Lig stands for Lignoceric acid and O stands for oleic acid.

According to an advantageous embodiment of the invention, said seed particle product is a packaged seed particle product. An advantage of this embodiment is that the packaged seed particle product is provided as a storable and transportable product and may be relatively easy to transport, without requiring storage tanks, and may thus be easily applied for chocolate seeding, i.e. seeding of chocolate, and at the same time the packaged seed particle product is also relatively robust to elevated transport temperatures.

According to an advantageous embodiment of the invention, the packaged seed particle product is provided within a sealed packaging. One advantage of this embodiment is that the packaged seed particle product may be provided within a protective atmosphere, or would be at least partly protected against fluctuations in ambient conditions, such as fluctuation in humidity.

The seed particle product may be provided in comprising particles of different sizes and size distributions. Thus, according to an advantageous embodiment of the invention, the seed particle product has a mean diameter of 0.1 micrometer to 50000 micrometer, such as 1 to 10000 micrometer, such as 2 to 5000 micrometer, such as 5 micrometer to 1000 micrometer.

According to a further advantageous embodiment of the invention, the seed particle product has a size distribution having a full width at half maximum (FWHM) of 0.1 to 50000 micrometer, such as 1 to 10000 micrometer, such as 5 to 5000 micrometer, such as 10 to 1000 micrometer.

The seed particle product may be provided as a non-stick seed particle product. Therefore, according to an advantageous embodiment of the invention, said seed particle product is non-stick.

One significant advantage of the above embodiment may be that said seed particle product may be provided as a flowable product and may thus be handled in a relatively simple manner. In fact, the problem with lack of flowability for some products may often be overlooked in this context, but ensuring a non-stick, flowable product may nevertheless be very important to process the seed particle product in a sufficiently simple manner, without forming agglomerations of individual particles when these are processed e.g. to make confectionary products, such as chocolate or chocolate-like products.

According to a further advantageous embodiment of the invention, said seed particle product is non-stick within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

According to an embodiment of the invention, said seed particle product is non-stick and has a density of 0.1 - 0.8 grams per cubic centimeter, such as 0.2 - 0.7 grams per cubic centimeter, such as 0.3 - 0.6 grams per cubic centimeter.

According to an embodiment of the invention, said seed particle product is non-stick within the temperature range of 0.0 - 37.0 degrees Celsius, such as 5.0 - 35.0 degrees Celsius, such as 10.0 - 30.0 degrees Celsius, such as 20.0 - 25.0 degrees Celsius and has a density of 0.1 - 0.8 grams per cubic centimeter, such as 0.2 - 0.7 grams per cubic centimeter, such as 0.3 - 0.6 grams per cubic centimeter.

According to further advantageous embodiment of the invention, said seed particle product comprises solid seed particles.

Said seed particle product being solid may be understood as at least 50 %, such as at least 75%, of the seed particle product being solid at room temperature. This may be verified by various techniques, one of which is a measurement of the solid fat content (SFC) at room temperature (20 degrees Celsius).

According to an even further advantageous embodiment of the invention, said seed particle product comprises solid seed particles within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

Said seed particle product being solid may be understood as at least 50 %, such as at least 75%, of the seed particle product being solid at a given temperature. This may be verified by various techniques, one of which is a measurement of the solid fat content (SFC) at the given temperature.

According to a still further advantageous embodiment of the invention, said seed particle product exhibits at least one further endotherm melt peak position.

According to a further embodiment of the invention said fat phase comprises triglycerides obtained from vegetable sources. Examples of such vegetable sources include vegetable fat selected from a group consisting of fats obtained from shea, sal, kokum, illipe, mango, mowra, cupuacu, allanblackia, pentadesma and any fraction and any combination thereof.

According to an embodiment of the invention said edible fat comprises triglycerides obtained from non-vegetable sources. By including triglycerides obtained from non-vegetable sources in the edible fat, such as for example triglycerides obtained by transesterification, it may be possible to obtain edible fats comprising a relatively higher amount of specific triglycerides, such as for example StOSt, AOA or BOB, as compared to obtaining triglycerides solely from vegetable sources. Thus, the amounts of StOSt-, AOA- or BOB-triglycerides obtained from non-vegetable sources comprised in an edible fat may for example be more than 70% by weight or higher, such as more than 80% by weight or higher, such as more than 90% by weight or higher.

One example of such triglycerides obtained from non-vegetable sources comprises triglycerides obtained from unicellular organisms. The unicellular organism may e.g. be selected from the group consisting of bacteria, algae or fungi, wherein fungi comprise yeast and mold.

Another example of such triglycerides obtained from non-vegetable sources comprises triglycerides obtained by transesterification. Triglycerides obtained by transesterification may be obtained from an edible fat and a saturated fatty acid source under the influence of enzymes having 1,3-specific transesterification activity.

Triglycerides obtained by transesterification may also be obtained from an edible fat and a saturated fatty acid source under the influence of an acid, a base or a non-enzymatic catalyst or any combination thereof.

The saturated fatty acid source may include stearic acid and/or stearic acid esters, such as stearic acid methyl ester. In combination therewith or alternative thereto, the saturated fatty acid source may include arachidic acid and/or arachidic acid esters, such as arachidic acid methyl ester. In combination therewith or alternative thereto, the saturated fatty acid source may include behenic acid and/or behenic acid esters, such as behenic acid methyl ester. In combination therewith or alternative thereto, the saturated fatty acid source may include lignoceric acid and/or lignoceric acid esters, such as lignoceric acid methyl ester.

The edible fat used for transesterification may comprise or consist of a fat selected from the group consisting of vegetable fats obtained from shea, sunflower, rapeseed, sal, safflower, palm, soy, kokum, illipe, mango, mowra, cupuacu and any fraction and any combination thereof.

The edible fat used for transesterification may comprise or consist of high oleic sunflower, high oleic safflower oil, high oleic rapeseed oil, or any combination thereof.

Furthermore, the edible fat used for transesterification may comprise or consist of shea olein or a shea olein fraction.

The fat phase may comprise a certain level of lower melting oils. Thus, in an embodiment of the invention, the fat phase comprises oils with a melting point below 25 degrees Celsius in an amount of 1.0-42% by weight, such as 3.0-35% by weight, such as 3.5-27%, such as 5-20% by weight.

In an embodiment of the invention, the fat phase comprises oils selected from the group consisting of sunflower oil, high oleic sunflower oil, soybean oil, rape seed oil, high oleic rape seed oil, soy oil, olive oil, maize oil, peanut oil, sesame oil, hazelnut oil, almond oil, corn oil, or fractions or mixtures or any combination thereof.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises 30.0 - 99.0% by weight of triglycerides having C18 - C24 saturated fatty acids in the sn-1 and sn-3 positions of the triglyceride and oleic acid in the sn-2 position of the triglyceride, such as 40.0 - 99.0 % by weight, such as 50.0 - 99.0% by weight.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises StOSt-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein St stands for stearic acid and O stands for oleic acid, and
wherein said temperature T_intermediate is between 39.5 and 42.0 degrees Celsius, such as 40.0 degrees Celsius, or 40.5 degrees Celsius, or 41.0 degrees Celsius, or 41.5 degrees Celsius.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises AOA-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein A stands for arachidic acid and O stands for oleic acid, and
wherein the temperature T_intermediate is between 46.0 and 48.0 degrees Celsius, such as between 47.0 and 48.0 degrees Celsius, such as 46.5 degrees Celsius, such as 46.5 degrees Celsius, such as 47.0 degrees Celsius, or 47.5 degrees Celsius, or 48.0 degrees Celsius.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises BOB-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein B stands for behenic acid and O stands for oleic acid, and
wherein the temperature T_intermediate is between 51.0 and 53.0 degrees Celsius, such as 51.5 degrees Celsius, or 52.0 degrees Celsius, or 52.5 degrees Celsius.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions, and
wherein said seed particle product comprises LigOLig-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein Lig stands for Lignoceric acid and O stands for oleic acid.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product has a density of less than 0.9 grams per cubic centimeter, such as less than 0.8 grams per cubic centimeter, such as less than 0.7 grams per cubic centimeter, such as less than 0.6 grams per cubic centimeter, such as less than 0.5 grams per cubic centimeter, such as less than 0.4 grams per cubic centimeter, such as less than 0.3 grams per cubic centimeter, such as less than 0.2 grams per cubic centimeter.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product has a density of less than 0.9 grams per cubic centimeter, such as less than 0.8 grams per cubic centimeter, such as less than 0.7 grams per cubic centimeter, such as less than 0.6 grams per cubic centimeter, such as less than 0.5 grams per cubic centimeter, such as less than 0.4 grams per cubic centimeter, such as less than 0.3 grams per cubic centimeter, such as less than 0.2 grams per cubic centimeter,
wherein said seed particle product comprises 30.0 - 99.0% by weight of triglycerides having C18 - C24 saturated fatty acids in the sn-1 and sn-3 positions of the triglyceride and oleic acid in the sn-2 position of the triglyceride, such as 40.0 - 99.0 % by weight, such as 50.0 - 99.0% by weight.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product has a density of less than 0.9 grams per cubic centimeter, such as less than 0.8 grams per cubic centimeter, such as less than 0.7 grams per cubic centimeter, such as less than 0.6 grams per cubic centimeter, such as less than 0.5 grams per cubic centimeter, such as less than 0.4 grams per cubic centimeter, such as less than 0.3 grams per cubic centimeter, such as less than 0.2 grams per cubic centimeter,
wherein said seed particle product comprises StOSt-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein St stands for stearic acid and O stands for oleic acid.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product has a density of less than 0.9 grams per cubic centimeter, such as less than 0.8 grams per cubic centimeter, such as less than 0.7 grams per cubic centimeter, such as less than 0.6 grams per cubic centimeter, such as less than 0.5 grams per cubic centimeter, such as less than 0.4 grams per cubic centimeter, such as less than 0.3 grams per cubic centimeter, such as less than 0.2 grams per cubic centimeter,
wherein said seed particle product comprises AOA-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein A stands for arachidic acid and O stands for oleic acid.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product has a density of less than 0.9 grams per cubic centimeter, such as less than 0.8 grams per cubic centimeter, such as less than 0.7 grams per cubic centimeter, such as less than 0.6 grams per cubic centimeter, such as less than 0.5 grams per cubic centimeter, such as less than 0.4 grams per cubic centimeter, such as less than 0.3 grams per cubic centimeter, such as less than 0.2 grams per cubic centimeter,
wherein said seed particle product comprises BOB-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein B stands for behenic acid and O stands for oleic acid.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product has a density of less than 0.9 grams per cubic centimeter, such as less than 0.8 grams per cubic centimeter, such as less than 0.7 grams per cubic centimeter, such as less than 0.6 grams per cubic centimeter, such as less than 0.5 grams per cubic centimeter, such as less than 0.4 grams per cubic centimeter, such as less than 0.3 grams per cubic centimeter, such as less than 0.2 grams per cubic centimeter,
wherein said seed particle product comprises LigOLig-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein Lig stands for Lignoceric acid and O stands for oleic acid.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product has a density of 0.1 - 0.8 grams per cubic centimeter, such as 0.2 - 0.7 grams per cubic centimeter, such as 0.3 - 0.6 grams per cubic centimeter.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product has a density of 0.1 - 0.8 grams per cubic centimeter, such as 0.2 - 0.7 grams per cubic centimeter, such as 0.3 - 0.6 grams per cubic centimeter,
wherein said seed particle product comprises 30.0 - 99.0% by weight of triglycerides having C18 - C24 saturated fatty acids in the sn-1 and sn-3 positions of the triglyceride and oleic acid in the sn-2 position of the triglyceride, such as 40.0 - 99.0 % by weight, such as 50.0 - 99.0% by weight.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product has a density of 0.1 - 0.8 grams per cubic centimeter, such as 0.2 - 0.7 grams per cubic centimeter, such as 0.3 - 0.6 grams per cubic centimeter,
wherein said seed particle product comprises StOSt-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein St stands for stearic acid and O stands for oleic acid.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product has a density of 0.1 - 0.8 grams per cubic centimeter, such as 0.2 - 0.7 grams per cubic centimeter, such as 0.3 - 0.6 grams per cubic centimeter,
wherein said seed particle product comprises AOA-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein A stands for arachidic acid and O stands for oleic acid.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product has a density of 0.1 - 0.8 grams per cubic centimeter, such as 0.2 - 0.7 grams per cubic centimeter, such as 0.3 - 0.6 grams per cubic centimeter,
wherein said seed particle product comprises BOB-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein B stands for behenic acid and O stands for oleic acid.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product has a density of 0.1 - 0.8 grams per cubic centimeter, such as 0.2 - 0.7 grams per cubic centimeter, such as 0.3 - 0.6 grams per cubic centimeter,
wherein said seed particle product comprises LigOLig-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein Lig stands for Lignoceric acid and O stands for oleic acid.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product is non-stick.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises 30.0 - 99.0% by weight of triglycerides having C18 - C24 saturated fatty acids in the sn-1 and sn-3 positions of the triglyceride and oleic acid in the sn-2 position of the triglyceride, such as 40.0 - 99.0 % by weight, such as 50.0 - 99.0% by weight,
wherein said seed particle product is non-stick.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises StOSt-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein St stands for stearic acid and O stands for oleic acid,
wherein said seed particle product is non-stick.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises AOA-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein A stands for arachidic acid and O stands for oleic acid,
wherein said seed particle product is non-stick.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises BOB-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein B stands for behenic acid and O stands for oleic acid,
wherein said seed particle product is non-stick.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises LigOLig-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein Lig stands for Lignoceric acid and O stands for oleic acid,
wherein said seed particle product is non-stick.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product is non-stick within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises 30.0 - 99.0% by weight of triglycerides having C18 - C24 saturated fatty acids in the sn-1 and sn-3 positions of the triglyceride and oleic acid in the sn-2 position of the triglyceride, such as 40.0 - 99.0 % by weight, such as 50.0 - 99.0% by weight,
wherein said seed particle product is non-stick within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises StOSt-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein St stands for stearic acid and O stands for oleic acid,
wherein said seed particle product is non-stick within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises AOA-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein A stands for arachidic acid and O stands for oleic acid,
wherein said seed particle product is non-stick within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises BOB-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein B stands for behenic acid and O stands for oleic acid,
wherein said seed particle product is non-stick within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises LigOLig-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein Lig stands for Lignoceric acid and O stands for oleic acid,
wherein said seed particle product is non-stick within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises solid seed particles.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises 30.0 - 99.0% by weight of triglycerides having C18 - C24 saturated fatty acids in the sn-1 and sn-3 positions of the triglyceride and oleic acid in the sn-2 position of the triglyceride, such as 40.0 - 99.0 % by weight, such as 50.0 - 99.0% by weight,
wherein said seed particle product comprises solid seed particles.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises StOSt-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein St stands for stearic acid and O stands for oleic acid,
wherein said seed particle product comprises solid seed particles.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises AOA-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein A stands for arachidic acid and O stands for oleic acid,
wherein said seed particle product comprises solid seed particles.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises BOB-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein B stands for behenic acid and O stands for oleic acid,
wherein said seed particle product comprises solid seed particles.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises LigOLig-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein Lig stands for Lignoceric acid and O stands for oleic acid,
wherein said seed particle product comprises solid seed particles.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises solid seed particles within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises 30.0 - 99.0% by weight of triglycerides having C18 - C24 saturated fatty acids in the sn-1 and sn-3 positions of the triglyceride and oleic acid in the sn-2 position of the triglyceride, such as 40.0 - 99.0 % by weight, such as 50.0 - 99.0% by weight,
wherein said seed particle product comprises solid seed particles within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises StOSt-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein St stands for stearic acid and O stands for oleic acid,
wherein said seed particle product comprises solid seed particles within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises AOA-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein A stands for arachidic acid and O stands for oleic acid,
wherein said seed particle product comprises solid seed particles within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises BOB-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight,
wherein B stands for behenic acid and O stands for oleic acid,
wherein said seed particle product comprises solid seed particles within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

According to an embodiment of the invention, said seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions,
wherein said seed particle product comprises LigOLig-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein Lig stands for Lignoceric acid and O stands for oleic acid,
wherein said seed particle product comprises solid seed particles within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

Moreover, the invention relates to a process for producing a seed particle product, the process comprising the steps of
providing a seed composition having a fat phase, wherein said fat phase comprises
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
particulating said seed composition to obtain the seed particle product,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions.

According to an embodiment of the invention, said process further comprises the step of packaging said seed particle product to obtain a packaged seed particle product.

In still a further embodiment, said packaged seed particle product is packed in a sealed packaging.

According to an advantageous embodiment of the invention, the process according to any of its embodiments is used for obtaining a seed particle product according to any of its embodiments.

Moreover, the invention relates to a use of a seed particle product according to any of its embodiments, or a seed particle product produced by a process according to any of its embodiments in production of confectionary products, such as chocolate or chocolate-like products. The miscibility of the seed particle product with chocolate may be faster and more homogeneous, since the lowest melting fats and crystal polymorphic forms of the solid seed particle are melted fast and may act as a carrier for the highest melting crystal polymorphic forms. The highest melting crystal polymorphic forms may thus be surrounded in a partly melted environment, when the seed is mixed with chocolate, and it may prevent lumping. This may in particular be the case when the solid seed particle is partly melted first to a seed slurry prior to mixing with a chocolate composition, but it may also be the case when the seed particle product is mixed with chocolate without being partly melted first. The partly melting in the latter case may then take place in the chocolate mix subsequent to mixing with the chocolate composition.

Moreover, the invention relates to a chocolate or a chocolate like product comprising the seed particle product according any of its embodiments.

The seed particle product according to the invention may generally be produced by the skilled person according to techniques known in the art and the guidance below, as long as the final goal of obtaining a seed particle product having a first and a second melt peak position according to the provisions of the invention is complied with. One advantageous way of obtaining the desired seed particle properties is to provide a fat phase, which may be based on vegetable fat, i.e. a fat phase which is rich in StOSt-triglycerides, but also includes an amount of POP- and/or POSt-triglycerides and optionally shorter chain triglycerides. This composition may then be subject to crystallization and/or transformation sequences, e.g. successive cooling/heating steps whereby the higher melting crystal polymorphic forms of for example StOSt-triglycerides are grown in the fat phase. This process is continued until high melting crystal polymorphic forms are present in an amount so that the fat phase exhibits a second endotherm melt peak position above at least 39.5 degrees Celsius, when measured by differential scanning calorimetry. A desired second endotherm melt peak position may typically be at least above 40 degrees Celsius, such as at least above 40.5 degrees Celsius, such as at least above 41.0 degrees Celsius, such as at least above 41.5 degrees Celsius, such as at least above 42.0 degrees Celsius depending on the fat phase composition. Due to for example the lower melting crystal polymorphic forms, POP- and/or POSt-triglycerides and the optional even shorter chained triglycerides, the seed will also exhibit a first endotherm melt peak position, which may both be lower than the second endotherm melt peak position, but still be sufficiently high to ensure that the seed particle product, comprising the fat phase, may be applied as a solid seed particle product under typical ambient temperature conditions under transport according to the provisions of the invention.

Referring now to figure 1, an illustration of different important temperatures is shown according to an embodiment of the invention. The thermogram curve of the seed particle product CSPP exemplifies a typical DSC melting thermogram of a seed particle product according to embodiments of the invention.

First, the DSC thermogram curve of the seed particle product CSPP displays a first endotherm melt peak position 1EMPP below a temperature T_intermediate, thus signifying that the seed particle product is not completely solid at T_intermediate.

Moreover, the DSC thermogram curve of the seed particle product CSPP displays a second endotherm melt peak position 2EMPP above the temperature T_intermediate being, thus signifying that the seed particle product is not completely melted at T_intermediate.

### EXAMPLES

### DSC analysis

In the following examples, samples were analyzed by Differential Scanning Calorimetry (DSC). This was done by a METTLER TOLEDO DSC 823e with a HUBER TC45 immersion cooling system. 10 +/- 1 mg of samples were hermetically sealed in a 40 microliter aluminum pan, with an empty pan as reference. Samples were heated from minus 20.0 degrees Celsius to 50.0 degrees Celsius at a rate of 3 degrees Celsius per minute to produce a DSC melting thermogram. Experiments were performed in duplicate.

### Shea Stearin IV 36

Triglyceride composition (most abundant):

**Table 1: Content of most abundant triglycerides, given in % by weight of the total triglyceride content. St denotes Stearic acid, O denotes Oleic acid, P denotes Palmitic acid, A denotes Arachidic acid, Li denotes Linoleic acid.**

| **Triglyceride** | **Amount in weight % of the total triglyceride content** |
|---|---|
| StOSt | 67% |
| POSt | 8% |
| StOA | 4% |
| StOO | 6% |
| StLiSt | 7% |
| Others | 8% |

The total content of SatOSat is about 80% of the triglyceride content, where Sat denotes saturated fatty acids, and O denotes Oleic acid.

### Example 1 - Seed slurry

Seed particle product in the form of seed flakes were produced from Shea Stearin IV 36. The Shea Stearin IV 36 was subjected to a crystallization zone CZ, where the crystallization zone was provided in a Scraped Surface Heat Exchanger. The Scraped Surface Heat Exchanger has an initial feed tank, from where the Shea Stearin IV 36 was fed through three subsequent temperature zones, A1, A2, and A3. The parameters and settings of the Scraped Surface Heat Exchanger and measured slurry temperatures are listed in table 2.

**Table 2: Settings of the Scraped Surface Heat Exchanger. Note that "Off' denotes no active temperature control in the given step, where ambient temperature was about 20 degrees Celsius.**

| **Scraped Surface Heat Exchanger** | |
|---|---|
| Feed tank temperature (degrees Celsius) | 62.3 |
| Product flow (kilogram per hour) | 80 |
| Total retention time in Scraped Surface Heat Exchanger (seconds) | 25.8 |
| Scraped Surface Heat Exchanger rotational speed (Rotations per minute) | 800 |
| Temperature of cooling jacket of A1 (degrees Celsius) | 10 |
| Slurry temperature at outlet from A1 (degrees Celsius) | 29.3 |
| Temperature of cooling jacket of A2 (degrees Celsius) | 0 |
| Slurry temperature at outlet from A2 (degrees Celsius) | 22.6 |
| Temperature of cooling jacket of A3 (degrees Celsius) | Off / 20 |
| Slurry temperature at outlet from A3 (degrees Celsius) | 25.7 |

The obtained product from the Scraped Surface Heat Exchanger was subjected to a transformation zone to obtain a transformed edible fat. The transformation zone comprised a transformation tank, a stirrer, and a temperature controller. The transformation zone was operated according to the parameters and settings as given in table 3.

**Table 3: Settings of the Transformation Zone TZ.**

| **Transformation zone** | |
|---|---|
| Transformation tank capacity (liters) | 30 |
| Transformation tank stirring speed (Rotations per minute) | 35 |
| Transformation tank temperature (degrees Celsius) | 39.5 |
| Retention time in transformation zone (hours) | 25 |

The transformed edible fat extracted from the transformation zone output was subjected to particulation in a particulation zone to obtain samples of seed particle product in the form of seed flakes. The particulation zone comprised a drum having a controllable drum surface temperature. The particulation zone was operated according to the parameters and settings as given in table 4.

**Table 4: Settings of the particulation zone.**

| **Particulation zone** | |
|---|---|
| Flaker capacity (kilogram per hour) | 10 |
| Flaker drum surface temperature (degrees Celsius) | -14 |
| Temperature of HSC slurry immediately prior to flaking (S5 , S6) (degrees Celsius) | 39.5 |
| Contact time slurry on flaker (seconds) | 3 |

### Example 2 - seed particle product as seed flakes

Samples of Shea stearin IV 36 were extruded in to 25 kg boxes and stored for 30 days to produce stored Shea stearin IV 36 samples.

Seed particle product as seed flakes was produced according to example 1. Samples of the seed flakes were placed in 25 kg boxes and stored for 30 days to produce stored seed flakes.

The stored Shea stearin IV 36 and the stored seed flakes were each collected 30 days after production and analyzed according to section "DSC analysis" above. The melting endotherms resulting from the DSC analysis is shown in figure 2 for the stored seed flakes (solid) and for the stored Shea stearin IV 36 (dashed).

As seen from figure 2, the stored seed flakes exhibit two distinct peaks, one below 40 degrees Celsius (maximum around 39 degrees Celsius), and one above 40 degrees Celsius (maximum around 42.5 degrees Celsius). Contrary to this, the stored shea stearin IV 36 only displays a single DSC peak, and no DSC peak below 40 degrees Celsius. Thus, at 40 degrees Celsius, the triglycerides corresponding to the DSC peak above 40 degrees Celsius would still be solid, i.e. would be solid seed crystals.

Table 5 displays the integrated intensities in percentage of total intensity derived from DSC melting endotherms shown in Figure 2 for the stored seed flakes (solid line in figure 2) and the stored Shea stearin IV 36 (dashed line in figure 2).

**Table 5. Integrated intensities in percentage of total intensity obtained from the DSC melt endotherms for stored seed flakes and stored Shea stearin IV 36.**

| **Temperature interval (degrees Celsius)** | **DSC integrated melt endotherm intensities (%)** | |
|---|---|---|
| | Stored seed flakes | Stored Shea Stearin IV 36 samples |
| Minus 20 to 20 | 0 | 0 |
| Minus 20 to 28 | 0 | 0 |
| Minus 20 to 30 | 1 | 1 |
| Minus 20 to 32 | 4 | 5 |
| Minus 20 to 34 | 11 | 10 |
| Minus 20 to 36 | 23 | 16 |
| Minus 20 to 38 | 46 | 26 |
| Minus 20 to 40 | 73 | 44 |
| Minus 20 to 42 | 84 | 83 |
| Minus 20 to 44 | 98 | 100 |
| Minus 20 to 46 | 99 | 100 |
| Minus 20 to 48 | 100 | 100 |

Figure 3 displays the values of table 5. From figure 3 it may be seen that about 73 of the DSC melt endotherm intensity is below 40 degrees Celsius for the stored seed flakes.

Furthermore, as can be seen from table 5, the DSC integrated melt endotherm intensity at 40 degrees Celsius would be 73%. Thus, solid seed crystals corresponding to up to about 27 % of the DSC integrated melt endotherm intensity would still be present in a seed slurry at 40 degrees Celsius.

Other examples of the composition of the seed particle product according to embodiments of the invention may be given according to the below table 6.

**Table 6: Different compositions of solid seed products mainly based on StOSt**

| **Triglyceride** | **Amount in weight % of the total triglyceride content** | | | | | |
|---|---|---|---|---|---|---|
| StOSt | 41% | 50% | 61% | 74% | 85% | 91% |
| Others | 39% | 50% | 39% | 24% | 15% | 9% |

Other examples of the composition of the seed particle product according to embodiments of the invention may be given according to the below table 7. It should be noted that the processing temperature in particular of the heating zone must be adapted to the applied functional triglyceride. In the case of AOA applied as the functional triglyceride as indicated in table 7 below, the temperature may advantageously be increased to obtain the desired seed slurry.

**Table 7: Different compositions of solid seed products mainly based on AOA**

| **Triglyceride** | **Amount in weight % of the total triglyceride content** | | | | | |
|---|---|---|---|---|---|---|
| AOA | 53% | 55% | 60% | 65% | 74% | 85% |
| Others | 47% | 45% | 40% | 35% | 26% | 15% |

Other examples of the composition of the seed particle product according to embodiments of the invention may be given according to the below table 8. It should be noted that the processing temperature in particular of the heating zone must be adapted to the applied functional triglyceride. In the case of BOB applied as the functional triglyceride as indicated in table 8 below, the temperature may advantageously be increased to obtain the desired seed slurry.

**Table 8: Different compositions of solid seed products mainly based on BOB**

| **Triglyceride** | **Amount in weight % of the total triglyceride content** | | | | | |
|---|---|---|---|---|---|---|
| BOB | 40% | 42% | 45% | 67% | 69% | 74% |
| Others | 60% | 58% | 55% | 33% | 31% | 26% |

## Claims

1. A seed particle product comprising a fat phase, said fat phase comprising
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10 +/- 1 mg of said seed particle product from 20 degrees Celsius to 65 degrees Celsius at a rate of 3 degrees Celsius/min to produce a melting thermogram defining said first and second endotherm melt peak positions.

2. The seed particle product according to claim 1, wherein said seed particle product has a density of less than 0.9 grams per cubic centimeter, such as less than 0.8 grams per cubic centimeter, such as less than 0.7 grams per cubic centimeter, such as less than 0.6 grams per cubic centimeter, such as less than 0.5 grams per cubic centimeter, such as less than 0.4 grams per cubic centimeter, such as less than 0.3 grams per cubic centimeter, such as less than 0.2 grams per cubic centimeter.

3. The seed particle product according to claim 1 or 2, wherein said seed particle product has a density of 0.1 - 0.8 grams per cubic centimeter, such as 0.2 - 0.7 grams per cubic centimeter, such as 0.3 - 0.6 grams per cubic centimeter.

4. The seed particle product according to any of claims 1-3, wherein said temperature T_intermediate is at least 40 degrees Celsius, such as at least 40.5 degrees Celsius, such as at least 41.0 degrees Celsius, such as at least 41.5 degrees Celsius, such as at least 42.0 degrees Celsius.

5. The seed particle product according to any of claims 1-4, wherein the temperature T_intermediate is between 39.5 and 42.0 degrees Celsius, such as 40.0 degrees Celsius, or 40.5 degrees Celsius, or 41.0 degrees Celsius, or 41.5 degrees Celsius.

6. The seed particle product according to any of claims 1-5, wherein said second endotherm melt peak position is at least 0.5 degree Celsius higher than said first endotherm melt peak position, such as at least 1.0 degree Celsius higher, such as at least 1.5 degrees Celsius higher, such as at least 2.0 degrees Celsius higher, such as at least 2.5 degrees Celsius higher, such as at least 3.0 degrees Celsius higher, such as at least 4.0 degrees Celsius higher.

7. The seed particle product according to any of claims 1-6, wherein said second endotherm melt peak position is between 0.5 and 6.0 degrees Celsius higher than said first endotherm melt peak position, , such as between 1.0 and 5.0 degrees Celsius higher, such as between 3.0 and 5.0 degrees Celsius higher, or such as between 1.0 and 3.0 degrees Celsius higher, such as between 1.5 and 3.0 degrees Celsius higher, such as between 2.0 and 3.0 degrees Celsius higher, such as between 2.5 and 3.0 degrees Celsius higher.

8. The seed particle product according to any of claims 1-7, wherein the first endotherm melt peak position accounts for 15.0 - 99.9 %, such as 20.0 - 99.9 %, such as 30.0 - 99.9 %, such as 40.0 - 99.9 %, such as 50.0 - 99.9 %, such as 60.0 - 99.9 %, such as 70.0 - 99.9 %, of the endotherm enthalpy during the measurement.

9. The seed particle product according to any of claims 1-8, wherein the second endotherm melt peak position accounts for 0.1-85.0 %, such as 1-85 %, such as 5-85 %, such as 10-85 %, such as 15-85 %, such as 20-85 %, of the endotherm enthalpy during the measurement.

10. The seed particle product according to any of claims 1-9, wherein said first endotherm melt peak position exhibit a first peak intensity, wherein said second endotherm melt peak position exhibit a second peak intensity, and wherein said first peak intensity is at least 30% of said second peak intensity.

11. The seed particle product according to any of claims 1-10, wherein an integrated intensity of said melting thermogram from 20 degrees Celsius to T_intermediate is at least 15 %, such as at least 25 %, such as at least 35%, such as at least 50%, such as at least 70%.

12. The seed particle product according to any of claims 1-11, wherein an integrated intensity of said melting thermogram from T_intermediate to 65 degrees Celsius is at least 5 %, such as at least 10%, such as at least 15%, such as at least 20 %.

13. The seed particle product according to any of claims 1-12, wherein said fat phase has a weight-ratio between
- triglycerides having C18 - C24 saturated fatty acids in the *sn-1* and *sn-3* positions and oleic acid in the *sn-2* position of the triglyceride, and
- triglycerides having C16 - C24 saturated fatty acids in the *sn-1* and *sn-3* positions and oleic acid in the *sn-2* position of the triglyceride,
which is between 0.40 - 0.99, such as 0.45 - 0.99, such as 0.50 - 0.99, such as 0.55 - 0.99, such as 0.60 - 0.99, such as 0.65 - 0.99, such as 0.70 - 0.99.

14. The seed particle product according to any of claims 1-13, wherein said seed particle product comprises 30.0 - 99.0% by weight of triglycerides having C18 - C24 saturated fatty acids in the sn-1 and sn-3 positions of the triglyceride and oleic acid in the sn-2 position of the triglyceride, such as 40.0 - 99.0 % by weight, such as 50.0 - 99.0% by weight.

15. The seed particle product according to any of claims 1-14, wherein said seed particle product comprises StOSt-triglycerides in an amount of 30.0 - 99.0% by weight of said triglycerides, such as 40.0 - 99.0% by weight, such as 50.0 - 99.0% by weight, such as 60.0 - 99.0% by weight, such as 70.0 - 99.0% by weight, wherein St stands for stearic acid and O stands for oleic acid.

16. The seed particle product according to any of claims 1-15, wherein the seed particle product has a mean diameter of 0.1 micrometer to 50000 micrometer, such as 1 to 10000 micrometer, such as 2 to 5000 micrometer, such as 5 micrometer to 1000 micrometer.

17. The seed particle product according to any of claims 1-16, wherein the seed particle product has a size distribution having a full width at half maximum (FWHM) of 0.1 to 50000 micrometer, such as 1 to 10000 micrometer, such as 5 to 5000 micrometer, such as 10 to 1000 micrometer.

18. The seed particle product according to any of claims 1-17, wherein said seed particle product is non-stick within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

19. The seed particles product according to any of claims 1-18, wherein said seed particle product comprises solid seed particles.

20. The seed particles product according to any of claims 1-19, wherein said seed particle product comprises solid seed particles within the temperature range of 0.0 - 37.0 degrees Celsius, such as 5.0 - 35.0 degrees Celsius, such as 10.0 - 30.0 degrees Celsius, such as 20.0 - 25.0 degrees Celsius.

21. The seed particles product according to any of claims 1-20, wherein said seed particle product exhibits at least one further endotherm melt peak position.

22. A process for producing a seed particle product,
the process comprising the steps of
providing a seed composition having a fat phase, wherein said fat phase comprises
60.0 - 99.9% by weight of triglycerides, and
40.0 - 99.0% by weight of triglycerides having C16 - C24 saturated fatty acids in the sn-1 and sn-3 positions of the triglyceride and oleic acid in the sn-2 position of the triglyceride,
particulating said seed composition to obtain the seed particle product,
wherein said seed particle product exhibits a first endotherm melt peak position below a temperature T_intermediate,
wherein said seed particle product exhibits a second endotherm melt peak position above said temperature T_intermediate,
wherein said temperature T_intermediate is at least 39.5 degrees Celsius,
wherein said endotherm melt peak positions are measured by differential scanning calorimetry by heating samples of 10+/- 1 mg of said seed particle product from 20 degrees Celsius to 65 degrees Celsius at a rate of 3 degrees Celsius/min to produce a melting thermogram defining said first and second endotherm melt peak positions.

23. The process according to claim 22 wherein the seed particle product is according to any of claims 1-21.

24. Use of a seed particle product according to any of claims 1-21, or a seed particle product produced by a process according to any of claims 22-23 in production of confectionary products, such as chocolate or chocolate-like products.

25. A chocolate or a chocolate like product comprising the seed particle product according to any of claims 1-21.

## Patentansprüche

1. Kristallisationskeimteilchen-Erzeugnis, umfassend eine Fettphase, wobei die Fettphase
60,0 - 99,9 Gew.-% Triglyceride und
40,0 - 99,0 Gew.-% Triglyceride mit gesättigten C16-C24-Fettsäuren an den Positionen sn-1 und sn-3 des Triglycerids und Ölsäure an der sn-2-Position des Triglycerids umfasst,
wobei das Kristallisationskeimteilchen-Erzeugnis eine erste endotherme Schmelzpeak-Position unterhalb eines Temperatur T_-Intermediärwerts ("temperature T_intermediate") zeigt,
wobei das Kristallisationskeimteilchen-Erzeugnis eine zweite endotherme Schmelzpeak-Position oberhalb des Temperatur T_-Intermediärwerts zeigt,
wobei der Temperatur T_-Intermediärwert mindestens 39,5 Grad Celsius beträgt,
wobei die endothermen Schmelzpeak-Positionen gemessen werden durch Differentialscanningkalorimetrie, indem Proben von 10 +/- 1 mg des Kristallisationskeimteilchen-Erzeugnisses mit einer Geschwindigkeit von 3 Grad Celsius/min von 20 Grad Celsius auf 65 Grad Celsius erwärmt werden, um ein Schmelzthermogramm zu erzeugen, welches die ersten und zweiten endothermen Schmelzpeak-Positionen definiert.

2. Kristallisationskeimteilchen-Erzeugnis nach Anspruch 1, wobei das Kristallisationskeimteilchen-Erzeugnis eine Dichte von weniger als 0,9 Gramm pro Kubikzentimeter, wie weniger als 0,8 Gramm pro Kubikzentimeter, wie weniger als 0,7 Gramm pro Kubikzentimeter, wie weniger als 0,6 Gramm pro Kubikzentimeter, wie weniger als 0,5 Gramm pro Kubikzentimeter, wie weniger als 0,4 Gramm pro Kubikzentimeter, wie weniger als 0,3 Gramm pro Kubikzentimeter, wie weniger als 0,2 Gramm pro Kubikzentimeter aufweist.

3. Kristallisationskeimteilchen-Erzeugnis nach Anspruch 1 oder 2, wobei das Kristallisationskeimteilchen-Erzeugnis eine Dichte von 0,1 - 0,8 Gramm pro Kubikzentimeter, wie 0,2 - 0,7 Gramm pro Kubikzentimeter, wie 0,3 - 0,6 Gramm pro Kubikzentimeter aufweist.

4. Kristallisationskeimteilchen-Erzeugnis nach einem der Ansprüche 1-3, wobei der Temperatur T_-Intermediärwert mindestens 40 Grad Celsius, wie mindestens 40,5 Grad Celsius, wie mindestens 41,0 Grad Celsius, wie mindestens 41,5 Grad Celsius, wie mindestens 42,0 Grad Celsius beträgt.

5. Kristallisationskeimteilchen-Erzeugnis nach einem der Ansprüche 1-4, wobei der Temperatur T_-Intermediärwert zwischen 39,5 und 42,0 Grad Celsius, wie 40,0 Grad Celsius oder 40,5 Grad Celsius oder 41,0 Grad Celsius oder 41,5 Grad Celsius beträgt.

6. Kristallisationskeimteilchen-Erzeugnis nach einem der Ansprüche 1-5, wobei die zweite endotherme Schmelzpeak-Position mindestens 0,5 Grad Celsius höher als die erste endotherme Schmelzpeak-Position, wie mindestens 1,0 Grad Celsius höher, wie mindestens 1,5 Grad Celsius höher, wie mindestens 2,0 Grad Celsius höher, wie mindestens 2,5 Grad Celsius höher, wie mindestens 3,0 Grad Celsius höher, wie mindestens 4,0 Grad Celsius höher ist.

7. Kristallisationskeimteilchen-Erzeugnis nach einem der Ansprüche 1-6, wobei die zweite endotherme Schmelzpeak-Position zwischen 0,5 und 6,0 Grad Celsius höher als die erste endotherme Schmelzpeak-Position, wie zwischen 1,0 und 5,0 Grad Celsius höher, wie zwischen 3,0 und 5,0 Grad Celsius höher, oder wie zwischen 1,0 und 3,0 Grad Celsius höher, wie zwischen 1,5 und 3,0 Grad Celsius höher, wie zwischen 2,0 und 3,0 Grad Celsius höher, wie zwischen 2,5 und 3,0 Grad Celsius höher ist.

8. Kristallisationskeimteilchen-Erzeugnis nach einem der Ansprüche 1-7, wobei die erste endotherme Schmelzpeak-Position 15,0 - 99,9%, wie 20,0 - 99,9%, wie 30,0 - 99,9%, wie 40,0 - 99,9%, wie 50,0 - 99,9%, wie 60,0 - 99,9%, wie 70,0 - 99,9% der endothermen Enthalpie während der Messung ausmacht.

9. Kristallisationskeimteilchen-Erzeugnis nach einem der Ansprüche 1-8, wobei die zweite endotherme Schmelzpeak-Position 0,1 - 85,0%, wie 1 - 85%, wie 5 - 85%, wie 10 - 85%, wie 15 - 85%, wie 20 - 85% der endothermen Enthalpie während der Messung ausmacht.

10. Kristallisationskeimteilchen-Erzeugnis nach einem der Ansprüche 1-9, wobei die erste endotherme Schmelzpeak-Position eine erste Peakintensität zeigt, wobei die zweite endotherme Schmelzpeak-Position eine zweite Peakintensität zeigt und wobei die erste Peakintensität mindestens 30% der zweiten Peakintensität beträgt.

11. Kristallisationskeimteilchen-Erzeugnis nach einem der Ansprüche 1-10, wobei eine integrierte Intensität des Schmelzthermogramms von 20 Grad Celsius bis zum T_-Intermediärwert mindestens 15%, wie mindestens 25%, wie mindestens 35%, wie mindestens 50%, wie mindestens 70% beträgt.

12. Kristallisationskeimteilchen-Erzeugnis nach einem der Ansprüche 1-11, wobei eine integrierte Intensität des Schmelzthermogramms von dem T_-Intermediärwert bis 65 Grad Celsius mindestens 5%, wie mindestens 10%, wie mindestens 15%, wie mindestens 20% beträgt.

13. Kristallisationskeimteilchen-Erzeugnis nach einem der Ansprüche 1-12, wobei die Fettphase ein Gewichtsverhältnis zwischen
- Triglyceriden mit gesättigten C18-C24-Fettsäuren an den Positionen *sn-1* und *sn-3* und Ölsäure an der sn-2-Position des Triglycerids und
- Triglyceriden mit gesättigten C16-C24-Fettsäuren an den Positionen *sn-1* und *sn-3* und Ölsäure an der sn-2-Position des Triglycerids
aufweist, welches zwischen 0,40 und 0,99, wie 0,45 - 0,99, wie 0,50 - 0,99, wie 0,55 - 0,99, wie 0,60 - 0,99, wie 0,65 - 0,99, wie 0,70 - 0,99 beträgt.

14. Kristallisationskeimteilchen-Erzeugnis nach einem der Ansprüche 1-13, wobei das Kristallisationskeimteilchen-Erzeugnis 30,0 - 99,0 Gew.-% Triglyceride mit gesättigten C18-C24-Fettsäuren an den Positionen sn-1 und sn-3 des Triglycerids und Ölsäure an der sn-2-Position des Triglycerids, wie 40,0 - 99,0 Gew.-%, wie 50,0 - 99,0 Gew.-% umfasst.

15. Kristallisationskeimteilchen-Erzeugnis nach einem der Ansprüche 1-14, wobei das Kristallisationskeimteilchen-Erzeugnis StOSt-Triglyceride in einer Menge von 30,0 - 99,0 Gew.-% der Triglyceride, wie 40,0 - 99,0 Gew.-%, wie 50,0 - 99,0 Gew.-%, wie 60,0 - 99,0 Gew.-%, wie 70,0 - 99,0 Gew.-%, worin St für Stearinsäure und O für Ölsäure steht, umfasst.

16. Kristallisationskeimteilchen-Erzeugnis nach einem der Ansprüche 1-15, wobei das Kristallisationskeimteilchen-Erzeugnis einen mittleren Durchmesser von 0,1 Mikrometer bis 50000 Mikrometern, wie 1 bis 10000 Mikrometern, wie 2 bis 5000 Mikrometern, wie 5 Mikrometern bis 1000 Mikrometern aufweist.

17. Kristallisationskeimteilchen-Erzeugnis nach einem der Ansprüche 1-16, wobei das Kristallisationskeimteilchen-Erzeugnis eine Größenverteilung mit einer Halbwertsbreite (FWHM; "full width at half maximum") von 0,1 bis 50000 Mikrometern, wie 1 bis 10000 Mikrometern, wie 5 bis 5000 Mikrometern, wie 10 bis 1000 Mikrometern aufweist.

18. Kristallisationskeimteilchen-Erzeugnis nach einem der Ansprüche 1-17, wobei das Kristallisationskeimteilchen-Erzeugnis innerhalb des Temperaturbereichs von 0,0 - 37,0 Grad Celsius, wie 5,0 - 35,0 Grad Celsius, wie 10,0 - 30,0 Grad Celsius, wie 20,0 - 25,0 Grad Celsius nichthaftend ist.

19. Kristallisationskeimteilchen-Erzeugnis nach einem der Ansprüche 1-18, wobei das Kristallisationskeimteilchen-Erzeugnis feste Kristallisationskeimteilchen umfasst.

20. Kristallisationskeimteilchen-Erzeugnis nach einem der Ansprüche 1-19, wobei das Kristallisationskeimteilchen-Erzeugnis feste Kristallisationskeimteilchen innerhalb des Temperaturbereichs von 0,0 - 37,0 Grad Celsius, wie 5,0 - 35,0 Grad Celsius, wie 10,0 - 30,0 Grad Celsius, wie 20,0 - 25,0 Grad Celsius umfasst.

21. Kristallisationskeimteilchen-Erzeugnis nach einem der Ansprüche 1-20, wobei das Kristallisationskeimteilchen-Erzeugnis mindestens eine weitere endotherme Schmelzpeak-Position zeigt.

22. Verfahren zum Herstellen eines Kristallisationskeimteilchen-Erzeugnisses, wobei das Verfahren die folgenden Schritte umfasst:
Bereitstellen einer Kristallisationskeim-Zusammensetzung mit einer Fettphase, wobei die Fettphase
60,0 - 99,9 Gew.-% Triglyceride und
40,0 - 99,0 Gew.-% Triglyceride mit gesättigten C16-C24-Fettsäuren an den Positionen sn-1 und sn-3 des Triglycerids und Ölsäure an der sn-2-Position des Triglycerids umfasst,
Überführen der Kristallisationskeim-Zusammensetzung in Teilchenform, um das Kristallisationskeimteilchen-Erzeugnis zu erhalten,
wobei das Kristallisationskeimteilchen-Erzeugnis eine erste endotherme Schmelzpeak-Position unterhalb eines Temperatur T_-Intermediärwerts ("temperature T_intermediate") zeigt,
wobei das Kristallisationskeimteilchen-Erzeugnis eine zweite endotherme Schmelzpeak-Position oberhalb des Temperatur T_-Intermediärwerts zeigt,
wobei der Temperatur T_-Intermediärwert mindestens 39,5 Grad Celsius beträgt,
wobei die endothermen Schmelzpeak-Positionen gemessen werden durch Differentialscanningkalorimetrie, indem Proben von 10 +/- 1 mg des Kristallisationskeimteilchen-Erzeugnisses mit einer Geschwindigkeit von 3 Grad Celsius/min von 20 Grad Celsius auf 65 Grad Celsius erwärmt werden, um ein Schmelzthermogramm zu erzeugen, welches die ersten und zweiten endothermen Schmelzpeak-Positionen definiert.

23. Verfahren nach Anspruch 22, wobei das Kristallisationskeimteilchen-Erzeugnis einem der Ansprüche 1-21 entspricht.

24. Verwendung eines Kristallisationskeimteilchen-Erzeugnisses nach einem der Ansprüche 1-21 oder eines durch ein Verfahren nach einem der Ansprüche 22-23 hergestellten Kristallisationskeimteilchen-Erzeugnisses bei einer Herstellung von Süßwarenerzeugnissen, wie von Schokolade oder schokoladeähnlichen Erzeugnissen.

25. Schokolade oder schokoladeähnliches Erzeugnis, welche(s) das Kristallisationskeimteilchen-Erzeugnis nach einem der Ansprüche 1-21 umfasst.

## Revendications

1. Produit sous forme de particules pour l'ensemencement comprenant une phase grasse, ladite phase grasse comprenant
60,0 - 99,9 % en poids de triglycérides, et
40,0 - 99,0 % en poids de triglycérides ayant des acides gras saturés en C16 - C24 dans les positions sn-1 et sn-3 du triglycéride et de l'acide oléique dans la position sn-2 du triglycéride,
où ledit produit sous forme de particules pour l'ensemencement présente une première position de pic de fusion endothermique au-dessous d'une température T-intermédiaire,
où ledit produit sous forme de particules pour l'ensemencement présente une seconde position de pic de fusion endothermique au-dessus de ladite température T-intermédiaire,
où ladite température T-intermédiaire est au moins 39,5 degrés Celsius,
où lesdites positions de pic de fusion endothermique sont mesurées par calorimétrie différentielle à balayage par chauffage d'échantillons de 10 +/- 1 mg dudit produit sous forme de particules pour l'ensemencement de 20 degrés Celsius à 65 degrés Celsius à une vitesse de 3 degrés Celsius/min pour produire un thermogramme de fusion définissant lesdites première et seconde positions de pic de fusion endothermique.

2. Produit sous forme de particules pour l'ensemencement selon la revendication 1, où ledit produit sous forme de particules pour l'ensemencement a une masse volumique de moins de 0,9 gramme par centimètre cube, comme moins de 0,8 gramme par centimètre cube, comme moins de 0,7 gramme par centimètre cube, comme moins de 0,6 gramme par centimètre cube, comme moins de 0,5 gramme par centimètre cube, comme moins de 0,4 gramme par centimètre cube, comme moins de 0,3 gramme par centimètre cube, comme moins de 0,2 gramme par centimètre cube.

3. Produit sous forme de particules pour l'ensemencement selon la revendication 1 ou 2, où ledit produit sous forme de particules pour l'ensemencement a une masse volumique de 0,1 - 0,8 gramme par centimètre cube, comme 0,2 - 0,7 gramme par centimètre cube, comme 0,3 - 0,6 gramme par centimètre cube.

4. Produit sous forme de particules pour l'ensemencement selon l'une quelconque des revendications 1-3, où ladite température T-intermédiaire est au moins 40 degrés Celsius, comme au moins 40,5 degrés Celsius, comme au moins 41,0 degrés Celsius, comme au moins 41,5 degrés Celsius, comme au moins 42,0 degrés Celsius.

5. Produit sous forme de particules pour l'ensemencement selon l'une quelconque des revendications 1-4, où la température T-intermédiaire est entre 39,5 et 42,0 degrés Celsius, comme 40,0 degrés Celsius, ou 40,5 degrés Celsius, ou 41,0 degrés Celsius, ou 41,5 degrés Celsius.

6. Produit sous forme de particules pour l'ensemencement selon l'une quelconque des revendications 1-5, où ladite seconde position de pic de fusion endothermique est au moins 0,5 degré Celsius plus élevée que ladite première position de pic de fusion endothermique, comme au moins 1,0 degré Celsius plus élevée, comme au moins 1,5 degré Celsius plus élevée, comme au moins 2,0 degrés Celsius plus élevée, comme au moins 2,5 degrés Celsius plus élevée, comme au moins 3,0 degrés Celsius plus élevée, comme au moins 4,0 degrés Celsius plus élevée.

7. Produit sous forme de particules pour l'ensemencement selon l'une quelconque des revendications 1-6, où ladite seconde position de pic de fusion endothermique est entre 0,5 et 6,0 degrés Celsius plus élevée que ladite première position de pic de fusion endothermique, comme entre 1,0 et 5,0 degrés Celsius plus élevée, comme entre 3,0 et 5,0 degrés Celsius plus élevée, comme entre 1,0 et 3,0 degrés Celsius plus élevée, comme entre 1,5 et 3,0 degrés Celsius plus élevée, comme entre 2,0 et 3,0 degrés Celsius plus élevée, comme entre 2,5 et 3,0 degrés Celsius plus élevée

8. Produit sous forme de particules pour l'ensemencement selon l'une quelconque des revendications 1-7, où la première position de pic de fusion endothermique rend compte de 15,0 - 99,9 %, comme 20,0 - 99,9 %, comme 30,0 - 99,9 %, comme 40,0 - 99,9 %, comme 50,0 - 99,9 %, comme 60,0 - 99,9 %, comme 70,0 - 99,9 % de l'enthalpie endothermique pendant la mesure.

9. Produit sous forme de particules pour l'ensemencement selon l'une quelconque des revendications 1-8, où la seconde position de pic de fusion endothermique rend compte de 0,1 - 85,0%, comme 1 - 85 %, comme 5 - 85 %, comme 10 - 85 %, comme 15 - 85 %, comme 20 - 85 %, de l'enthalpie endothermique pendant la mesure.

10. Produit sous forme de particules pour l'ensemencement selon l'une quelconque des revendications 1-9, où ladite première position de pic de fusion endothermique présente une première intensité de pic, où ladite seconde position de pic de fusion endothermique présente une seconde intensité de pic, et où ladite première intensité de pic est au moins 30 % de ladite seconde intensité de pic.

11. Produit sous forme de particules pour l'ensemencement selon l'une quelconque des revendications 1-10, où une intensité intégrée dudit thermogramme de fusion de 20 degrés Celsius à T-intermédiaire est au moins 15 %, comme au moins 25 %, comme au moins 35 %, comme au moins 50 %, comme au moins 70 %.

12. Produit sous forme de particules pour l'ensemencement selon l'une quelconque des revendications 1-11, où une intensité intégrée dudit thermogramme de fusion de T-intermédiaire à 65 degrés Celsius est au moins 5 %, comme au moins 10 %, comme au moins 15 %, comme au moins 20 %.

13. Produit sous forme de particules pour l'ensemencement selon l'une quelconque des revendications 1-12, où ladite phase grasse a un rapport en poids entre
- les triglycérides ayant des acides gras saturés en C18 - C24 dans les positions *sn-1* et *sn-3* et de l'acide oléique dans la position *sn-2* du triglycéride, et
- les triglycérides ayant des acides gras saturés en C16 - C24 dans les positions *sn-1* et *sn-3* et de l'acide oléique dans la position *sn-2* du triglycéride,
qui est entre 0,40 - 0,99, comme 0,45 - 0,99, comme 0,50 - 0,99, comme 0,55 - 0,99, comme 0,60 - 0,99, comme 0,65 - 0,99, comme 0,70 - 0,99.

14. Produit sous forme de particules pour l'ensemencement selon l'une quelconque des revendications 1-13, où ledit produit sous forme de particules pour l'ensemencement comprend 30,0 - 99,0 % en poids de triglycérides ayant des acides gras saturés en C18 - C24 dans les positions sn-1 et sn-3 du triglycéride et de l'acide oléique dans la position sn-2 du triglycéride, comme 40,0 - 99,0 % en poids, comme 50,0 - 99,0 % en poids.

15. Produit sous forme de particules pour l'ensemencement selon l'une quelconque des revendications 1-14, où ledit produit sous forme de particules pour l'ensemencement comprend des triglycérides StOSt en une quantité de 30,0 - 99,0 % en poids desdits triglycérides, comme 40,0 - 99,0 % en poids, comme 50,0 - 99,0 % en poids, comme 60,0 - 99,0 % en poids, comme 70,0 - 99,0 % en poids, où St représente l'acide stéarique et O représente l'acide oléique.

16. Produit sous forme de particules pour l'ensemencement selon l'une quelconque des revendications 1-15, où le produit sous forme de particules pour l'ensemencement a un diamètre moyen de 0,1 micromètre à 50000 micromètres, comme 1 à 10000 micromètres, comme 2 à 5000 micromètres, comme 5 micromètres à 1000 micromètres.

17. Produit sous forme de particules pour l'ensemencement selon l'une quelconque des revendications 1-16, où le produit sous forme de particules pour l'ensemencement a une distribution de dimensions ayant une largeur à mi-hauteur (FWHM) de 0,1 à 50000 micromètres, comme 1 à 10000 micromètres, comme 5 à 5000 micromètres, comme 10 à 1000 micromètres.

18. Produit sous forme de particules pour l'ensemencement selon l'une quelconque des revendications 1-17, où ledit produit sous forme de particules pour l'ensemencement est non collant dans la plage de température de 0,0 - 37,0 degrés Celsius, comme 5,0 - 35,0 degrés Celsius, comme 10,0 - 30,0 degrés Celsius, comme 20,0 - 25,0 degrés Celsius.

19. Produit sous forme de particules pour l'ensemencement selon l'une quelconque des revendications 1-18, où ledit produit sous forme de particules pour l'ensemencement comprend des particules pour l'ensemencement solides.

20. Produit sous forme de particules pour l'ensemencement selon l'une quelconque des revendications 1-19, où ledit produit sous forme de particules pour l'ensemencement comprend des particules pour l'ensemencement solides dans la plage de température de 0,0 - 37,0 degrés Celsius, comme 5,0 - 35,0 degrés Celsius, comme 10,0 - 30,0 degrés Celsius, comme 20,0 - 25,0 degrés Celsius.

21. Produit sous forme de particules pour l'ensemencement selon l'une quelconque des revendications 1-20, où ledit produit sous forme de particules pour l'ensemencement présente au moins une autre position de pic de fusion endothermique.

22. Procédé pour produire un produit sous forme de particules pour l'ensemencement,
le procédé comprenant les étapes de
fournir une composition pour l'ensemencement ayant une phase grasse, où ladite phase grasse comprend
60,0 - 99,9 % en poids de triglycérides, et
40,0 - 99,0 % en poids de triglycérides ayant des acides gras saturés en C16 - C24 dans les positions sn-1 et sn-3 du triglycéride et de l'acide oléique dans la position sn-2 du triglycéride,
mettre sous forme de particules ladite composition pour l'ensemencement pour obtenir le produit sous forme de particules pour l'ensemencement,
où ledit produit sous forme de particules pour l'ensemencement présente une première position de pic de fusion endothermique au-dessous d'une température T-intermédiaire,
où ledit produit sous forme de particules pour l'ensemencement présente une seconde position de pic de fusion endothermique au-dessus de ladite température T-intermédiaire,
où ladite température T-intermédiaire est au moins 39,5 degrés Celsius,
où lesdites positions de pic de fusion endothermique sont mesurées par calorimétrie différentielle à balayage par chauffage d'échantillons de 10 +/- 1 mg dudit produit sous forme de particules pour l'ensemencement de 20 degrés Celsius à 65 degrés Celsius à une vitesse de 3 degrés Celsius/min pour produire un thermogramme de fusion définissant lesdites première et seconde positions de pic de fusion endothermique.

23. Procédé selon la revendication 22 où le produit sous forme de particules pour l'ensemencement est selon l'une quelconque des revendications 1-21.

24. Utilisation d'un produit sous forme de particules pour l'ensemencement selon l'une quelconque des revendications 1-21, ou d'un produit sous forme de particules pour l'ensemencement produit par un procédé selon l'une quelconque des revendications 22-23 dans la production de produits de confiserie, comme le chocolat ou les produits analogues au chocolat.

25. Chocolat ou produit analogue au chocolat comprenant le produit sous forme de particules pour l'ensemencement selon l'une quelconque des revendications 1-21.
